(19) Europäisches Patentamt
European Patent Office
Office européen des brevets

(11) EP 4 692 225 A1

(12) EUROPEAN PATENT APPLICATION
published in accordance with Art. 153(4) EPC

(43) Date of publication:
11.02.2026 Bulletin 2026/07

(21) Application number: 24780583.1

(22) Date of filing: 27.03.2024

(51) International Patent Classification (IPC):
*C08L 29/04* (2006.01) *B32B 27/30* (2006.01)

(52) Cooperative Patent Classification (CPC):
B32B 27/30; C08L 29/04

(86) International application number:
PCT/JP2024/012537

(87) International publication number:
WO 2024/204482 (03.10.2024 Gazette 2024/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 31.03.2023 JP 2023058957

(71) Applicant: MITSUBISHI CHEMICAL CORPORATION
Tokyo 100-8251 (JP)

(72) Inventors:
- IKUBO, Satoshi
Tokyo 100-8251 (JP)
- TANIGUCHI, Masahiko
Tokyo 100-8251 (JP)

(74) Representative: Hoffmann Eitle
Patent- und Rechtsanwälte PartmbB
Arabellastraße 30
81925 München (DE)

# (54) POLYVINYL ALCOHOL-BASED RESIN COMPOSITION, FILM OR SHEET, AND MULTILAYER STRUCTURE

(57) The present invention pertains to a resin composition containing a PVA-based resin, formic acid root, and acetic acid root, wherein the content of the formic acid root in the resin composition is 4-500 ppm, and the content ratio of the formic acid root to the acetic acid root (formic acid root/acetic acid root) is 0.001-0.200.

EP 4 692 225 A1

## Description

### Technical Field

The present invention relates to a resin composition containing a polyvinyl alcohol-based resin and having excellent thermal stability and molding stability at the time of melt molding, a film or sheet made of the resin composition, and a multilayer structure including a layer containing the resin composition.

### Background Art

Containers and films for packaging used in a wide range of fields, such as for agriculture, for civil engineering, for manufacturing industry, for medical application, for packaging, for recreation, toys, general goods, household goods, containers, and components, are required to have gas barrier properties from the viewpoint of preventing deterioration of quality of the contents.

Since polyvinyl alcohol (PVA) has high crystallinity due to hydrogen bonding of hydroxy groups and excellent gas barrier properties based on the high crystallinity, a PVA-based resin or a resin composition thereof has been used as a gas barrier layer for the aforementioned containers and films for packaging.

In general, a molded article such as a container or a film is produced by melt molding from the viewpoint of productivity.

Meanwhile, although it is known that a molded article of polyvinyl alcohol (PVA) is difficult to be produced by heat melt molding due to its melting point and decomposition temperature being close, a modified PVA-based resin that can be melt-molded has been also proposed. (e.g., PVA-based resins having a 1,2-diol structure in a side chain, described in Patent Document 1, Patent Document 2, and Patent Document 3)

Furthermore, since a molded article of a PVA-based resin is hard, it is known that a plasticizer is added to a PVA-based resin composition for melt molding, such as for a film for packaging or a container (e.g., Patent Document 4).

### Citation List

### Patent Document

Patent Document 1: JP 2002-284818 A
Patent Document 2: JP 2004-285143 A
Patent Document 3: JP 2006-95825 A
Patent Document 4: JP 2001-288321 A

## Summary of Invention

### Technical Problem

However, since excellent gas barrier properties of a PVA-based resin is based on high crystallinity of a PVA molecular chain, a problem of reduction in gas barrier properties occurs in a modified PVA-based resin, in which a plasticizer is contained or another monomer is copolymerized, due to crystallinity being disturbed. Furthermore, when melt molding of a PVA-based resin is performed continuously for a long period of time, molding stability is not good because a viscosity change in the PVA-based resin is great and the PVA-based resin is thickened, and thermal stability is also not good because deteriorated article is formed due to heat. Thus, improvement for these problems described above has been demanded.

The present invention is made in light of such circumstances, and an object of the present invention is to provide a resin composition containing a PVA-based resin and having excellent thermal stability and molding stability at the time of melt molding.

### Solution to Problem

The inventors of the present invention found that a resin composition containing appropriate amounts of formic acid radicals and acetic acid radicals in a PVA-based resin has improved thermal stability and molding stability at the time of melt molding compared to a case of a PVA-based resin alone, and thus completed the present invention.

Specifically, the gist of the present invention is as follows.

A first aspect of the present invention is a resin composition containing a polyvinyl alcohol-based resin, formic acid radicals, and acetic acid radicals, a content of the formic acid radicals in the resin composition being from 4 to 500 ppm, and a content ratio of the formic acid radicals to the acetic acid radicals (formic acid radicals/acetic acid radicals) being from 0.001 to 0.200.
The resin composition of a second aspect of the present invention is characterized in that a content of the acetic acid radicals in the resin composition is 10000 ppm or less in the first aspect.
The resin composition of a third aspect of the present invention is characterized in that the polyvinyl alcohol-based resin contains a structural unit having a modification group other than ethylene in the first or second aspect.
The resin composition of a fourth aspect of the present invention is characterized in that the polyvinyl alcohol-based resin contains a structural unit having a hydrophilic modification group in any one of the first to third aspects.
The resin composition of a fifth aspect of the present invention is characterized in that the polyvinyl alcohol-based resin contains a structural unit having a primary hydroxy group in a side chain in any one of the first to fourth aspects.
The resin composition of a sixth aspect of the present invention is characterized in that the content of the formic acid radicals is from 5 to 100 ppm in any one of the first to fifth aspects.
A seventh aspect of the present invention is a molded body containing the resin composition described in any one of the first to sixth aspects.
An eighth aspect of the present invention is a film containing the resin composition described in any one of the first to sixth aspects.
A ninth aspect of the present invention is a sheet containing the resin composition described in any one of the first to sixth aspects.
A tenth aspect of the present invention is a multilayer structure containing at least one layer containing the resin composition described in any one of the first to sixth aspects.

## Advantageous Effects of Invention

The resin composition of an embodiment of the present invention contains a PVA-based resin and has excellent thermal stability and molding stability at the time of melt molding.

## Description of Embodiments

### Resin Composition

The resin composition of an embodiment of the present invention is a resin composition containing a polyvinyl alcohol-based resin (PVA-based resin), formic acid radicals, and acetic acid radicals, a content of the formic acid radicals in the resin composition being from 4 to 500 ppm, and a content ratio of the formic acid radicals to the acetic acid radicals (formic acid radicals/acetic acid radicals) being from 0.001 to 0.200.

### PVA-Based Resin

The PVA-based resin used in the resin composition of an embodiment of the present invention is a PVA-based resin for molding, such as film formation, which is performed by a solution casting method, and also includes a copolymerization-modified PVA-based resin obtained by saponifying a copolymer obtained by copolymerizing a monomer for modification to impart a desired property (e.g., waterproofness) and a post-modified PVA-based resin obtained by subjecting a PVA-based resin to a post-modification, in addition to unmodified PVA.
In the present description, unless otherwise limited, "PVA-based resin" is a collective term for unmodified PVA, copolymerization-modified PVA, and post-modified PVA. When the copolymerization-modified PVA and the post-modified PVA are collectively referred, they are referred to as "modified PVA-based resin(s)".

### 1. Unmodified PVA-Based Resin

The unmodified PVA-based resin is a polyvinyl alcohol obtained by saponifying a polyvinyl ester obtained by polymerizing a vinyl ester-based monomer and includes a vinyl alcohol unit represented by Formula (1) below and a vinyl ester unit that is an unsaponified moiety (Formula (2) below). The vinyl ester unit is included when the degree of saponification is less than 100%.

[Chem. 1]

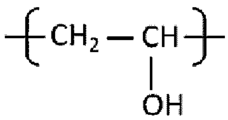

(1)

[Chem. 2]

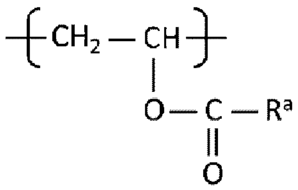

(2)

Examples of the vinyl ester-based monomer described above include vinyl formate, vinyl acetate, vinyl propionate, vinyl valerate, vinyl butyrate, vinyl isobutyrate, vinyl pivalate, vinyl caprate, vinyl laurate, vinyl stearate, vinyl benzoate, and vinyl versatate. Vinyl acetate is preferably used for economical reasons.

In Formula (2), $R^a$ depends on the type of the used vinyl ester-based monomer and is a methyl group in a case where a vinyl acetate monomer is used.

The number average degree of polymerization (measured in accordance with JIS K 6726:1994) of the unmodified PVA-based resin is typically from 150 to 4000, preferably from 200 to 2000, more preferably from 250 to 800, and even more preferably from 300 to 600. When the average degree of polymerization is too low, formation of a stable form during melt molding tends to be difficult. When the average degree of polymerization is too high, molding tends to be difficult because the viscosity of the resin composition becomes excessively high.

As an indicator of the average degree of polymerization of the unmodified PVA-based resin, a viscosity when an aqueous solution is formed may be used. The viscosity of 4 wt% aqueous solution of the unmodified PVA-based resin at 20°C, as measured in accordance with JIS K 6726:1994, is typically from 1.5 to 20 mPa·s, preferably from 2 to 12 mPa·s, and particularly preferably from 2.5 to 8 mPa·s. When the viscosity is too low, formation of a stable form during melt molding tends to be difficult. When the viscosity is too high, molding tends to be difficult.

The degree of saponification of the unmodified PVA-based resin is typically from 70 to 99.9 mol%, preferably from 75 to 99.7 mol%, and particularly preferably from 78 to 99.5 mol%. When the degree of saponification is too low, flexibility becomes excessively high, and shape stability during lamination tends to be lower.

Note that the degree of saponification is measured in accordance with JIS K 6726:1994.

The melting point of the unmodified PVA-based resin is preferably approximately from 200 to 250°C although the melting point also depends on the degree of polymerization and the degree of saponification, and the decomposition temperature is preferably approximately from 250 to 300°C.

Note that, in a case of a typical PVA-based resin, the bonding form of the main chain is mainly 1,3-diol bonding, and the content of 1,2-diol bonding is approximately from 1.5 to 1.7 mol%; however, by setting a high polymerization temperature during polymerization of the vinyl ester-based monomer, the content of 1,2-diol bonding can be increased.

2. Modified PVA-Based Resin

The copolymerization-modified PVA-based resin is obtained by saponifying a copolymer in which a monomer for modification is copolymerized.

Examples of the monomer for copolymerization (monomer for modification) used in the copolymerization-modified PVA-based resin described above include olefins, such as ethylene, propylene, isobutylene, α-octene, α-dodecene, and α-octadecene; unsaturated acids, such as acrylic acid, methacrylic acid, crotonic acid, maleic acid, maleic anhydride, and itaconic acid, or salts thereof or mono- or di-alkyl esters thereof; nitriles, such as acrylonitrile and methacrylonitrile; amides, such as acrylamide and methacrylamide; olefin sulfonic acids, such as ethylenesulfonic acid, allylsulfonic acid, and methallylsulfonic acid, or salts thereof; alkyl vinyl ethers, N-acrylamide methyltrimethylammonium chloride, allyltrimethylammonium chloride, dimethylallyl vinyl ketone, N-vinylpyrrolidone, vinyl chloride, vinylidene chloride, polyoxyalkylene (meth)allyl ethers, such as polyoxyethylene (meth)allyl ether and polyoxypropylene (meth)allyl ether; polyoxyalkylene (meth)acrylates, such as polyoxyethylene (meth)acrylate and polyoxypropylene (meth)acrylate; polyoxyalkylene (meth)acrylamides, such as polyoxyethylene (meth)acrylamide and polyoxypropylene (meth)acrylamide; polyoxyethylene (1-(meth)acrylamide-1,1-dimethylpropyl)ester, polyoxyethylene vinyl ether, polyoxypropylene vinyl ether, polyoxyethylene allylamine, polyoxypropylene allylamine, polyoxyethylene vinylamine, polyoxypropylene vinylamine, hydroxy group-containing α-olefins, such as 3-buten-1-ol, 4-penten-1-ol, and 5-hexen-1-ol, and derivatives thereof, such as acylated products thereof.

The post-modified PVA-based resin is obtained by subjecting a PVA-based resin to a post-modification.

Examples of the post-modified PVA-based resin include a post-modified PVA-based resin having an acetoacetyl group formed by a reaction with a diketene, a post-modified PVA-based resin having a polyalkyleneoxide group formed by a reaction with ethylene oxide, a post-modified PVA-based resin having a hydroxyalkyl group formed by a reaction with an epoxy compound or the like, and a post-modified PVA-based resin obtained by reacting a PVA-based resin with an aldehyde compound having various functional groups.

The modification amount in the modified PVA-based resin, i.e., content of a structural unit derived from various monomers in the copolymer or a functional group introduced by a post-reaction, cannot be generally specified because characteristics vary greatly depending on the modification type; however, the modification amount is typically in a range of 0.1 to 20 mol% and particularly preferably in a range of 0.5 to 15 mol%.

Among these various modified PVA-based resins, in the present embodiment, use of a PVA resin containing a structural unit having a modification group other than ethylene is preferred from the viewpoint of barrier properties at low humidity.

Furthermore, among these various modified PVA-based resins, in the present embodiment, from the viewpoint of solubility in water, a PVA-based resin containing a structural unit having a modification group that is hydrophilic (hydrophilic modification group) is preferably used. Examples of the hydrophilic modification group include a hydroxy group (hydroxyl group), a carboxyl group, and an amino group. Furthermore, from the viewpoint of melt processing, a PVA-based resin containing a structural unit having a primary hydroxy group in a side chain is preferred. Particularly from the viewpoint of thermal stability, a PVA-based resin containing a structural unit having a 1,2-diol modification group is preferred.

The modified PVA-based resin containing a structural unit having a 1,2-diol modification group include a structural unit having a 1,2-diol modification group in a side chain in addition to a vinyl alcohol unit represented by Formula (1) below and constituting the polyvinyl alcohol and a vinyl ester unit that is unsaponified moiety (Formula (2) below). The vinyl ester unit is included when the degree of saponification is less than 100%.

[Chem. 3]

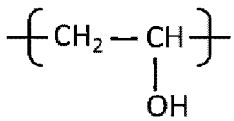

(1)

[Chem. 4]

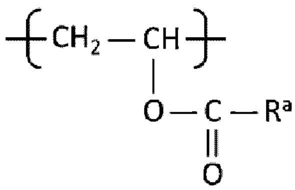

(2)

In Formula (2), $R^a$ depends on the type of the used vinyl ester-based monomer and, for example, is a methyl group in a case where a vinyl acetate monomer is used.

The structural unit having a 1,2-diol modification group in a side chain is preferably a unit containing 1,2-diol in a side chain represented by Formula (3) below.

[Chem. 5]

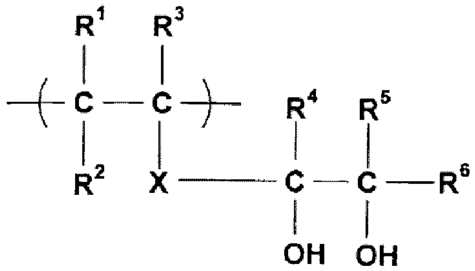

(3)

In Formula (3), $R^1$ to $R^6$ each independently represent a hydrogen atom or an alkyl group having from 1 to 4 carbons, and X represents a single bond or a bond linkage.

In General Formula (3), $R^1$ to $R^6$ are each independently a hydrogen atom or an alkyl group having from 1 to 4 carbons (e.g., a methyl group, an ethyl group, an n-propyl group, an isopropyl group, an n-butyl group, an isobutyl group, and a tert-butyl group, and may have a substituent such as a halogen group, a hydroxy group, an ester group, a carboxylic acid group, or a sulfonic acid group). $R^1$ to $R^6$ are each independently more preferably a hydrogen atom. $R^1$ to $R^6$ may be all the same or different and are preferably all hydrogen atoms. A case where $R^1$ to $R^6$ are all hydrogen atoms is preferred because a terminal of a side chain is a primary hydroxy group, which results in improved reactivity with an adhesive resin, such as an acid-modified polyolefin-based resin and facilitates formation of a laminate.

In Formula (3), X is a single bond or a bond linkage. Examples of the bond linkage (X) include hydrocarbon groups, such as an alkylene group, an alkenylene group, an alkynylene group, a phenylene group, and a naphthylene group (these hydrocarbon groups may be substituted with a halogen atom, such as a fluorine atom, a chlorine atom, or a bromine atom), -O-, $-(CH_2O)_m-$, $-(OCH_2)_m-$, $-(CH_2O)_mCH_2-$, -CO-, -COCO-, $-CO(CH_2)_mCO-$, $-CO(C_6H_4)CO-$, - S-, -CS-, -SO-, $-SO_2-$, -NR-, -CONR-, -NRCO-, -CSNR-, -NRCS-, -NRNR-, $-HPO_4-$, $-Si(OR)_2-$, $-OSi(OR)_2-$, $-OSi(OR)_2O-$, $-Ti(OR)_2-$, $-OTi(OR)_2-$, $-OTi(OR)_2O-$, -Al(OR)-, -OAl(OR)-, and -OAl(OR)O- (R is each independently a freely chosen substituent and is preferably a hydrogen atom or an alkyl group, and m is an integer of 1 to 5).

From the viewpoint of stability during production or use, X is preferably a single bond, an alkylene group having 6 or less carbons (especially, a methylene group), or $-CH_2OCH_2-$. Among these, from the viewpoint of thermal stability and from the viewpoint of stability at high temperatures or under acidic conditions, a single bond is the most preferred.

The structural unit represented by Formula (3) above is particularly preferably a structural unit in which $R^5$ and $R^6$ are each a hydrogen atom and which has a primary hydroxy group in a side chain, and the most preferred structural unit is a structural unit represented by Formula (3a) below, in which all of $R^1$ to $R^6$ are hydrogen atoms, and X is a single bond.

[Chem. 6]

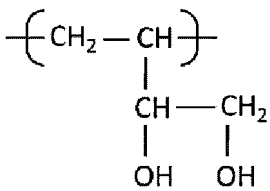

(3a)

The degree (content) of modification of the modified PVA-based resin is preferably from 0.1 to 20 mol%, more preferably from 0.5 to 15 mol%, even more preferably from 1 to 10 mol%, and particularly preferably from 2 to 8 mol%. When the modification percentage is too low, reactivity with an adhesive resin, such as an acid-modified polyolefin-based resin, tends to be reduced. When the modification percentage is too high, crystallization speed becomes too slow, and appearance tends to be deteriorated, such as deformation of a laminate formed of the modified PVA-based resin and another resin.

The number average degree of polymerization (measured in accordance with JIS K 6726:1994) of the modified PVA-based resin is preferably from 150 to 4000, more preferably from 200 to 2000, even more preferably from 250 to 800, and particularly preferably from 300 to 600. When the average degree of polymerization is too low, formation of a stable form during melt molding tends to be difficult. When the average degree of polymerization is too high, molding tends to be difficult because the viscosity of the resin composition becomes excessively high.

The viscosity of a 4 mass% aqueous solution of the modified PVA-based resin at 20°C as measured in accordance with JIS K 6726:1994 is preferably from 1.5 to 20 mPa·s, more preferably from 2 to 12 mPa·s, and particularly preferably from 2.5 to 8 mPa·s. When the viscosity is too low, formation of a stable form during melt molding tends to be difficult. When the viscosity is too high, molding tends to be difficult.

The degree of saponification (average degree of saponification measured in accordance with JIS K 6726:1994) of the modified PVA-based resin is preferably from 70 to 100 mol%, more preferably from 80 to 99.9 mol%, and particularly preferably from 85 to 99.7 mol%. When the degree of saponification is too low, gas barrier properties tend to deteriorate.

Although the melting point of the modified PVA-based resin also depends on the degree of polymerization and degree of saponification, the melting point is preferably from 160 to 230°C, and the decomposition temperature is preferably from 250 to 350°C.

The PVA-based resin that can be used in the resin composition of an embodiment of the present invention may be one type or a mixture of two or more types. When a mixture of two or more types is used, examples thereof include a combination of unmodified PVA-based resins described above, a combination of an unmodified PVA-based resin and various modified PVA-based resin, and a combination of different types of modified PVA-based resins. Furthermore, examples thereof also include a combination of the same type of modified PVA-based resins but having different degrees of saponification, degrees of polymerization, modification percentages, and the like.

Furthermore, the resin composition contains preferably 80 mass% or greater, more preferably 90 mass% or

greater, and even more preferably 95 mass% or greater, of the PVA-based resin.

Formic Acid, Formate Ion

The formic acid is a carboxylic acid having a formyl group in addition to a carboxy group.

The thermal stability and molding stability can be improved by a ratio of an acid and a base contained in the PVA-based resin. Here, in general, acetic acid and/or an acetate is used as an acid. Meanwhile, the inventors of the present invention found that thermal stability and molding stability of the PVA-based resin during melt molding can be improved by using formic acid and/or a formate as an acid in addition to acetic acid and/or an acetate.

Although the reason for this is not clear, it is presumed that oxidative degradation of the PVA-based resin is suppressed compared to a case where only acetic acid and/or an acetate is used because formic acid and a formate have reductivity.

Here, acetic acid and acetate ions are collectively referred to as "acetic acid radical(s)", and formic acid and formate ions are collectively referred to as "formic acid radical(s)".

Formic acid can be typically produced by (i) a method of producing formic acid by reacting methanol and carbon monoxide under a strong base condition to form methyl formate and then hydrolyzing methyl formate, (ii) a method of producing formic acid by reacting methyl formate and ammonia to form formaldehyde and then hydrolyzing formaldehyde with sulfuric acid, and (iii) a method of producing formic acid by reacting sodium hydroxide and carbon monoxide to form sodium formate and then neutralizing sodium formate with hydrochloric acid.

Note that a commercially available product of the formic acid may be used, and examples of the commercially available product include formic acid available from FUJIFILM Wako Pure Chemical Corporation.

The formate ion can be added by using a formate. Examples of the formate include sodium formate, potassium formate, lithium formate, magnesium formate, calcium formate, barium formate, zinc formate, copper formate, iron formate, nickel formate, manganese formate, lead formate, tin formate, chromium formate, and ammonium formate, and sodium formate is preferably used.

Note that a commercially available product of sodium formate may be used, and examples of the commercially available product include sodium formate available from FUJIFILM Wako Pure Chemical Corporation.

Furthermore, the content of the formic acid radicals in the resin composition of an embodiment of the present invention (with respect to the total mass of the resin composition) is from 4 to 500 ppm, and, for example, preferably from 4 to 450 ppm, and more preferably from 5 to 100 ppm. Here, the content of the formic acid radicals is preferably 4.3 ppm or greater, more preferably 4.5 ppm or greater, even more preferably 4.8 ppm or greater, yet even more preferably 5 ppm or greater, especially preferably 10 ppm or greater, and particularly preferably 15 ppm or greater. Furthermore, the content of the formic acid radicals is preferably 450 ppm or less, more preferably 400 ppm or less, even more preferably 300 ppm or less, yet even more preferably 200 ppm or less, especially preferably 150 ppm or less, and particularly preferably 100 ppm or less. Note that the numerical range of the content of the formic acid radicals can be set by a freely chosen combination of the lower limit value and the upper limit value described above and/or numerical values described in the section of Examples. Furthermore, this also applies to numerical ranges for those other than the content of the formic acid radicals.

To achieve improvement effects of thermal stability and molding stability by the formic acid radicals, the content described above (from 4 to 500 ppm) is required. The content of the formic acid radicals of 4 ppm or greater results in good thermal stability. Furthermore, the content of the formic acid radicals of 500 ppm or less results in good molding stability during melt molding.

Note that the content of the formic acid radicals in the resin composition can be measured by a measurement method described in the section of Examples.

Note that, as the formic acid radicals, the resin composition of an embodiment of the present invention may contain only formic acid, may contain only formate ions, or may contain both formic acid and formate ions.

Acetic Acid, Acetate Ion

The resin composition of an embodiment of the present invention further contains acetic acid radicals (acetic acid, acetate ion).

Acetic acid is a type of carboxylic acid and has a linear saturated hydrocarbon chain. Acetic acid can be synthesized by carbonylation of methanol, and examples of the commercially available product include acetic acid available from FUJIFILM Wako Pure Chemical Corporation.

The acetate ion can be added by using an acetate. The acetate is not generally limited, and sodium acetate is preferably used. Examples of the commercially available product of sodium acetate include sodium acetate available from FUJIFILM Wako Pure Chemical Corporation.

Furthermore, the content of the acetic acid radicals in the resin composition of an embodiment of the present

invention (with respect to the total mass of the resin composition) is preferably 1000 ppm or greater, more preferably 1500 ppm or greater, even more preferably 1800 ppm or greater, and particularly preferably 2000 ppm or greater, from the viewpoint of molding stability during melt molding. Furthermore, the content of the acetic acid radicals is preferably 10000 ppm or less, more preferably 9500 ppm or less, even more preferably 9000 ppm or less, and particularly preferably 8500 ppm or less, from the viewpoint of thermal stability. The content of the acetic acid radicals is, for example, 10000 ppm or less, and preferably from 1000 to 10000 ppm.

Note that the acetic acid radicals may be separately added and blended in addition to a case where the acetic acid radicals are contained as impurities generated in the production process of the PVA-based resin.

Furthermore, the content of the acetic acid radicals in the resin composition can be measured by a measurement method described in the section of Examples.

Furthermore, from the viewpoints of thermal stability and molding stability, the content ratio of the formic acid radicals to the acetic acid radicals (formic acid radicals/acetic acid radicals) is 0.001 or greater, preferably 0.0015 or greater, more preferably 0.0018 or greater, and particularly preferably 0.002 or greater. Furthermore, the content ratio of the formic acid radicals/acetic acid radicals (formic acid radicals/acetic acid radicals) is 0.200 or less, more preferably 0.100 or less, and particularly preferably 0.050 or less, from the viewpoint of thermal stability. That is, the content ratio of the formic acid radicals to the acetic acid radicals (formic acid radicals/acetic acid radicals) is from 0.001 to 0.200. Note that the content ratio of the formic acid radicals to the acetic acid radicals (formic acid radicals/acetic acid radicals) is on a mass basis.

Note that, as the acetic acid radicals, the resin composition of an embodiment of the present invention may contain only acetic acid, may contain only acetate ions, or may contain both acetic acid and acetate ions.

Additional Component

1. Additional Plasticizer

The resin composition of an embodiment of the present invention may contain an additional plasticizer in a range that does not impair the effects (solubility in water, gas barrier properties) of the present invention.

2. Additional Resin

The resin composition of an embodiment of the present invention may contain an additional polymer (resin) in a range (e.g., less than 30 mass% of the resin composition) that does not impair the effects of the present invention. Examples of the polymer (resin) that may be contained include various thermoplastic resins, such as polyamide, polyester, polyethylene, polypropylene, and polystyrene.

3. Additional Additive

Furthermore, as necessary, the resin composition of an embodiment of the present invention may contain a reinforcing agent, a filler, a pigment, a dye, a lubricant, an antioxidant, an antistatic agent, a UV absorber, a thermal stabilizer, a light stabilizer, a surfactant, an antimicrobial agent, an antistatic agent, a desiccating agent, an antiblocking agent, a flame retardant, a crosslinking agent, a curing agent, a foaming agent, a nucleating agent, and the like in a range (e.g., 10 mass% or less of the resin composition) that does not impair the effects of the present invention.

The resin composition of an embodiment of the present invention having the composition described above has good thermal stability and molding stability due to coexistence of the formic acid radicals and the acetic acid radicals without impairing characteristics of the PVA-based resin.

Method for Producing Resin Composition

The resin composition having the composition described above is produced by (i) a method of dry-blending formic acid and/or a formate, acetic acid and/or an acetate, and additional components in a PVA-based resin and then melt-kneading, (ii) a method of mixing an aqueous solution of a PVA-based resin, formic acid and/or a formate, acetic acid and/or an acetate, and additional components, or the like. The method (i) is preferred, and a resin composition in a pellet form can be obtained.

Note that the acetic acid radicals may be contained as impurities generated in the production process of the PVA-based resin. In this case, acetic acid and/or an acetate may be not necessarily added in the method of (i) or (ii) described above.

In a case where acetic acid and/or an acetate is added, as the order of addition, any one of formic acid and/or a formate and acetic acid and/or an acetate may be added first, and these may be added as a mixture, in which formic acid

and/or a formate and acetic acid and/or an acetate are mixed in advance, to the PVA-based resin, or formic acid and/or a formate may be added to a mixture, in which the PVA-based resin and acetic acid and/or an acetate are mixed in advance.

Melt Molded Body of Resin Composition and Production Method Thereof

The resin composition of an embodiment of the present invention can be melt-molded, and the melt molding can employ a melt extrusion molding method that is ordinarily used for thermoplastic resins.
Thus, the resin composition of an embodiment of the present invention can be suitably used for production of various molded bodies. For example, the resin composition can be used for a melt molded body for which gas barrier properties are required and, in particular, used for applications such as bags made of melt molded films, stretched films, and sheets; containers made of cups, trays, tubes, and bottles; and lids.
The film, sheet, or container may be a film, sheet, or container made of the resin composition of an embodiment of the present invention alone (single-layer) and may be a multilayer structure in which two or more layers, including another thermoplastic resin, paper, and/or the like, are layered. Such a multilayer structure includes at least one layer containing the resin composition of an embodiment of the present invention (resin composition layer).
Examples of the use of the multilayer structure including the resin composition layer of an embodiment of the present invention include food packaging materials such as coffee capsules and shrink films, pharmaceutical packaging materials, packaging materials for cosmetics such as cases for lotion or foundation, packaging materials for metal components, packaging materials for electronic components, packaging materials for articles for which deterioration of characteristics due to oxidation or moisture absorption should be suppressed, packaging materials for substances for which odor transfer or odor leakage are concerned, and multilayer structures used for various sheets for agriculture and materials for agriculture, such as mulch sheets, sheets for fumigation, seedling trays, and covering sheets.
Examples of the melt molding method that can be applied include injection molding and extrusion molding. Extrusion molding is particularly suitable as a molding method for a film or a sheet, and examples thereof include a T-die molding method and an inflation molding method (tubular film method). In addition to a single-layer extrusion, multilayer extrusion may be employed. For the production of a multilayer structure in which films are layered, a multilayer extrusion (coextrusion molding) is preferred.
The obtained film or sheet may be subjected to secondary processing such as uniaxial or biaxial stretching. Since the resin composition of an embodiment of the present invention has excellent stretchability, stretching treatment is preferably performed to improve strength of the film and/or to further improve gas barrier properties.

Examples

The present invention will be further described below by Examples and Comparative Examples but the present invention is not limiter by the following examples.

Measurement and Evaluation Methods

1. Degree of Saponification (mol%)

The degree of saponification was measured in accordance with JIS K 6726:1994.

2. Number Average Degree of Polymerization

The number average degree of polymerization was measured in accordance with JIS K 6726:1994.

3. Degree of Modification (Mol%)

The degree of modification was determined based on a charged amount of a monomer for copolymerization at the time of synthesis of a PVA-based resin.

4. Formic Acid Radical Amount Measurement

Formic acid radicals were quantified with reference to Journal of Pharmaceutical and Biomedical Analysis 41 (2006) 738 to 743.
5.0 g of p-toluenesulfonic acid was dissolved in ethanol, and thus 500 mL of a solution (1%-p-toluenesulfonic acid-ethanol solution) was obtained. In a 20 mL vial, 0.5 g of a sample (pellet was frozen and crushed) was weighed precisely, 5 mL of the 1%-p-toluenesulfonic acid-ethanol solution was added using a transfer pipette, and the vial was

sealed tightly by a vial crimper (for a blank, only 5 mL of 1%-p-toluenesulfonic acid-ethanol solution). The vial was set in a ultrasonic washer set at 60°C and operated for 2 hours, and thus ethyl esterification of formic acid was performed. The vial was taken out from the ultrasonic washer and allowed to stand still at room temperature for 3 hours or longer. In a volumetric flask, 0.5 g of formic acid was precisely weighed and diluted to a fixed volume of 50 mL (10000 mg/L solution) using ethanol. This liquid was diluted properly and gradiently to prepare standard solutions. In a 20 mL vial, 0.5 g of the standard solution was precisely weighed, 5 mL of 1%-p-toluenesulfonic acid-ethanol solution was added by using a transfer pipette, and the vial was tightly sealed by a vial crimper. Headspace analysis was performed under the conditions listed in Table 1 below.

[Table 1]

| Headspace sampler | |
|---|---|
| Item | Condition |
| Used instrument | Agilent 7697A |
| Oven | 60°C |
| Loop | 100°C |
| Transfer line | 100°C |
| Vial equilibration | 15 min |
| Vial stirring | Level 7, 136 stirring/min |
| Inlet time | 0.05 min |
| Filling flow rate | 50 mL/min |
| Filling pressure | 23.2 psi |
| Filling time | 1 min |
| Filling mode | Constant flow rate up to a specified pressure |
| Loop size | 3 mL |

| GC | |
|---|---|
| Item | Condition |
| Used instrument | Agilent 7890B |
| Analytical column | DB-1301 (60 m*0.32 mm*1.0 μm) |
| Oven | 60°C (9 min) → Rate 100°C/min → 200°C (2 min) |
| Inlet temperature | 170°C |
| Carrier gas | Helium (0.8 mL/min) |
| Total flow | 55.8 mL/min |
| Septum purge flow rate | 3 mL/min |
| Split ratio | 65:1 |
| Split flow rate | 52 mL/min |
| MSD transfer line | 220°C |

| MS | |
|---|---|
| Item | Condition |
| Used instrument | Agilent 5977B |
| Ion source temperature | 230°C |
| MS quadrupole temperature | 150°C |
| (SIM mode) | |

(continued)

| MS | |
|---|---|
| Item | Condition |
| Detected ion | m/z = 31, 45, 56, 74 (quantification: m/z = 74) |

Note that, in Table 1, GC means gas chromatography. Furthermore, MS means mass spectrometry.

5. Acetic Acid Radical Amount Measurement

The content of the acetic acid radicals was measured by the following pH measurement and neutralization titration method.

(1) pH Measurement

6.00 g of the resin composition pellets and 138 g of water were weighed and placed in a medium bottle. The cap of the medium bottle was closed, and the bottle was placed in a constant-temperature water tank at 30 ± 1°C, and stirring was performed for 2 hours to dissolve the resin composition pellets. After 2 hours, the cap of the medium bottle was opened, and stirring and dissolving were continued for 10 minutes. After 10 minutes, stirring was stopped. An electrode of a pH meter "F-54 (Horiba)" was taken out from an immersion liquid and washed with pure water, and then used for calibration of the pH meter in buffer solutions having a pH of 4.01 and a pH of 6.86. After the calibration, the electrode was immersed in the sample, and thus the pH was measured.

(2) Neutralization Titration Method

In an Erlenmeyer flask, 3.00 g of the resin composition pellets and 100 g of water were weighed and placed. Heating and stirring were performed to dissolve the resin composition pellets. After dissolution, the solution was cooled to room temperature, and 5 drops of an indicator (methyl orange) was added. Titration was performed using a 0.1 mol/L HCl aqueous solution until the solution became yellowish red.

6. Thermal Stability

The thermal stability was evaluated by the following constant-temperature TGA method.
For 5 mg of the resin composition pellets, the weight after heating was measured using a thermogravimetric analyzer (Pyris 1 TGA, available from PerkinElmer) under the conditions including in a nitrogen atmosphere at 20 mL/min, a temperature of 230°C, and a heating time of 1 hour, and a residual percentage was measured.
In a case where the residual percentage was 90% or greater, the thermal stability was evaluated as good.
In a case where the residual percentage was less than 90%, the thermal stability was evaluated as poor.

7. Molding Stability

The dynamic viscosity behavior was evaluated by the following technique.
Using a plastograph (available from Brabender), 55 g of the resin composition pellets were kneaded under the conditions at 230°C and 50 rpm for 30 minutes. The torque value after 5 minutes had passed and the torque value after 20 minutes had passed were measured, and evaluation was performed based on the torque ratio thereof (Torque (20 min)/Torque (5 min)). A larger value indicates increase in the viscocity of the PVA-based resin composition. For melt molding, the dynamic viscosity behavior with a small viscosity change is preferred.

PVA-Based Resin

As the PVA-based resin containing a primary hydroxy group in a side chain, the PVA-based resin containing 1,2-diol in a side chain, which has a 1,2-diol-containing structural unit in a side chain represented by Formula (3a), was used. The used PVA-based resin containing 1,2-diol in a side chain had a degree of modification (content of the 1,2-diol-containing structural unit in a side chain) of 6 mol%, a degree of saponification of 99.2 mol% as measured in accordance with JIS K 6726, and a number average degree of polymerization of 450 as measured in accordance with JIS K 6726.

[Chem. 7]

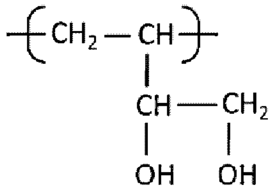

(3a)

(1) Formic Acid

Formic acid available from FUJIFILM Wako Pure Chemical Corporation was used.

(2) Sodium Formate

Sodium formate available from FUJIFILM Wako Pure Chemical Corporation was used.

(3) Acetic Acid

Acetic acid available from FUJIFILM Wako Pure Chemical Corporation was used.

(4) Sodium Acetate

Sodium acetate available from FUJIFILM Wako Pure Chemical Corporation was used.

Preparation and Evaluation of Resin Compositions

Examples 1 to 6 and Comparative Examples 1 to 4

A PVA-based resin modified with 1,2-diol in a side chain, formic acid, sodium formate, acetic acid, and sodium acetate were blended in the proportions listed in Table 2. The mixture was melt-kneaded under the following conditions by using a twin-screw extruder TEM-18DS (Shibaura Machine Co., Ltd.), and thus each of the resin composition pellets according to Examples 1 to 6 and Comparative Examples 1 to 4 was prepared.
Diameter (D) 20 mm

$$L/D=48$$

Screw rotation speed: 300 rpm
Set temperature:

$$C1/C2/C3/C4/C5/C6/D = 160/200/200/210/210/200/200°C$$

Screw pattern: Screw kneading at two positions
Screen mesh: 90/120/90 mesh
Discharge rate: 5 kg/hr

For the prepared resin composition pellets, evaluation of thermal stability by the constant-temperature TGA method and evaluation of molding stability by the dynamic viscosity behavior were performed based on the measurement and evaluation methods described above. The results are shown collectively in Table 2.

[Table 2]

| | Degree of saponification | Modified species | Degree of modification | Formic acid | Na formate | Formate ion | Formic acid radicals (formic acid + formate ion) | Acetic acid | Na acetate | Acetate ion | Acetic acid radicals (acetic acid + acetate ion) | Formic acid radicals /acetic acid radicals | Constant-temperature TGA method | Dynamic viscosity behavior | Thermal stability | Molding stability |
|---|---|---|---|---|---|---|---|---|---|---|---|---|---|---|---|---|
| | | | | | | | | | | | | | 230°C, 1 h | 20 min/ 5 min | | |
| | mol% | - | mol% | ppm | ppm | ppm | ppm | ppm | ppm | ppm | ppm | - | (%) | (-) | Evaluation | Evaluation |
| Example 1 | 99.2 | 1,2-diol | 6 | 5 | 0 | 0 | 5 | 206 | 3200 | 2303 | 2509 | 0.0020 | 96.3 | 1.06 | ○ | ○ |
| Example 2 | 99.2 | 1.2-diol | 6 | 5 | 3 | 2 | 7 | 57 | 3239 | 2331 | 2388 | 0.0029 | 94.5 | 1.05 | ○ | ○ |
| Example 3 | 99.2 | 1,2-diol | 6 | 5 | 36 | 24 | 29 | 45 | 3240 | 2332 | 2377 | 0.0122 | 95.3 | 1.07 | ○ | ○ |
| Example 4 | 99.2 | 1.2-diol | 6 | 5 | 71 | 47 | 52 | 35 | 3318 | 2388 | 2423 | 0.0215 | 94.6 | 1.02 | ○ | ○ |
| Example 5 | 99.2 | 1,2-diol | 6 | 5 | 3 | 2 | 7 | 57 | 10004 | 7200 | 7257 | 0.0010 | 93.0 | 0.85 | ○ | ○ |
| Example 6 | 99.2 | 1.2-diol | 6 | 5 | 8 | 5 | 10 | 57 | 5001 | 3599 | 3656 | 0.0027 | 97.3 | 0.99 | ○ | ○ |
| Comparative Example 1 | 99.2 | 1,2-diol | 6 | 5 | 822 | 544 | 549 | 31 | 3715 | 2674 | 2705 | 0.2030 | 87.6 | 0.92 | × | ○ |
| Comparative Example 2 | 99.2 | 1,2-diol | 6 | 5 | 0 | 0 | 5 | 57 | 15000 | 10796 | 10853 | 0.0005 | 83.2 | 0.8 | × | ○ |
| Comparative Example 3 | 99.2 | 1,2-diol | 6 | 5 | 8 | 5 | 10 | 57 | 15000 | 10796 | 10853 | 0.0009 | 86.7 | 0.85 | × | ○ |
| Comparative Example 4 | 99.2 | 1.2-diol | 6 | < 3 | 0 | 0 | ND(<3) | 2929 | 427 | 307 | 3236 | < 0.0009 | 96.9 | 2.58 | ○ | × |

As shown in Table 2 above, since the resin composition of Comparative Example 1, which contained a large amount of formic acid radicals and had a large formic acid radical/acetic acid radical ratio, and the resin compositions of Comparative Examples 2 and 3, which had a small formic acid radical/acetic acid radical ratio, each had a small residual percentage in the evaluation by the constant-temperature TGA method, it was found that the thermal stability thereof was poor. It was also found that the resin composition of Comparative Example 4, which had a small amount of formic acid radicals, the molding stability was poor due to a large viscosity change in the dynamic viscosity behavior evaluation. On the other hand, the resin compositions of Examples 1 to 6 each had a high residual percentage in the evaluation by the constant-temperature TGA method and a small viscosity change in the dynamic viscosity behavior evaluation. From these results, it was found that the resin compositions of embodiments of the present invention had good thermal stability and molding stability.

Examples 7 and 8 and Comparative Examples 5 and 6

As the PVA-based resin, an unmodified PVA-based resin was used. The used PVA-based resin had a degree of saponification of 87.6 mol% as measured in accordance with JIS K 6726 and a number average degree of polymerization of 500 as measured in accordance with JIS K 6726.

Each of the resin composition pellets according to Examples 7 and 8 and Comparative Examples 5 and 6 was prepared in the same manner as in Examples 1 to 6 and Comparative Examples 1 to 4 except for blending an unmodified PVA-based resin, formic acid, sodium formate, acetic acid, and sodium acetate in the proportions listed in Table 3.

For the prepared resin composition pellets, evaluation of thermal stability by the constant-temperature TGA method and evaluation of molding stability by the dynamic viscosity behavior were performed based on the measurement evaluation methods described above. The results are shown collectively in Table 3.

[Table 3]

| | Degree of saponification | Modified species | Degree of modification | Formic acid | Na formate | Formate ion | Formic acid radicals (formic acid + formate ion) | Acetic acid | Na acetate | Acetate ion | Acetic acid radicals (acetic acid + acetate ion) | Formic acid radicals/acetic acid radicals | Constant-temperature TGA method TGA | Dynamic viscosity behavior method | Thermal stability | Molding stability |
|---|---|---|---|---|---|---|---|---|---|---|---|---|---|---|---|---|
| | | | | | | | | | | | | | 230°C, 1 h | 20 min/5 min | | |
| | mol% | - | mol% | ppm | ppm | ppm | ppm | ppm | ppm | ppm | ppm | - | (%) | (-) | Evaluation | Evaluation |
| Example 7 | 87.6 | - | - | 42 | 0 | 0 | 42 | 798 | 10521 | 7572 | 8370 | 0.0050 | 92.4 | 2.53 | ○ | ○ |
| Example 8 | 87.6 | - | - | 42 | 225 | 149 | 191 | 798 | 10521 | 7572 | 8370 | 0.0228 | 91.9 | 2.72 | ○ | ○ |
| Comparative Example 5 | 87.6 | - | - | 42 | 5 | 3 | 45 | 798 | 65985 | 47492 | 48290 | 0.0009 | 82.8 | 3.98 | × | × |
| Comparative Example 6 | 87.6 | - | - | < 3 | 0 | 0 | ND(<3) | 4560 | 938 | 675 | 5235 | - 0.0006 | 92.7 | 3.54 | ○ | × |

As shown in Table 3 above, it was found that the resin composition of Comparative Example 6, which had a small amount of formic acid radicals, the molding stability was poor due to a large viscosity change in the dynamic viscosity behavior evaluation. On the other hand, the resin compositions of Examples 7 and 8 each had a high residual percentage in the evaluation by the constant-temperature TGA method and had a viscosity change smaller than those of the resin compositions of Comparative Examples 5 and 6 in the dynamic viscosity behavior evaluation. From these results, it was found that the resin compositions of embodiments of the present invention had good thermal stability and molding stability.

Specific embodiments of the present invention were described in the above examples, but the above examples are merely illustrative and are not to be construed as limiting. Various modifications apparent to those skilled in the art are intended to be within the scope of the present invention.

The present application is based on JP 2023-58957 filed on March 31, 2023, the content of which is incorporated herein by reference.

Industrial Applicability

Since the resin composition of an embodiment of the present invention contains a PVA-based resin and has adequate thermal stability and molding stability at the time of melt molding, the resin composition can be suitably used for various packaging materials, especially for food packaging materials, such as coffee capsules.

## Claims

**1.** A resin composition comprising a polyvinyl alcohol-based resin, formic acid radicals, and acetic acid radicals,

a content of the formic acid radicals in the resin composition being from 4 to 500 ppm, and
a content ratio of the formic acid radicals to the acetic acid radicals (formic acid radicals/acetic acid radicals) being from 0.001 to 0.200.

**2.** The resin composition according to claim 1, wherein a content of the acetic acid radicals in the resin composition is 10000 ppm or less.

**3.** The resin composition according to claim 1, wherein the polyvinyl alcohol-based resin contains a structural unit having a modification group other than ethylene.

**4.** The resin composition according to claim 1, wherein the polyvinyl alcohol-based resin contains a structural unit having a hydrophilic modification group.

**5.** The resin composition according to claim 1, wherein the polyvinyl alcohol-based resin contains a structural unit having a primary hydroxy group in a side chain.

**6.** The resin composition according to claim 1, wherein the content of the formic acid radicals is from 5 to 100 ppm.

**7.** A molded body comprising the resin composition described in any one of claims 1 to 6.

**8.** A film comprising the resin composition described in any one of claims 1 to 6.

**9.** A sheet comprising the resin composition described in any one of claims 1 to 6.

**10.** A multilayer structure comprising at least one layer containing the resin composition described in any one of claims 1 to 6.

**INTERNATIONAL SEARCH REPORT**

International application No.
**PCT/JP2024/012537**

**A. CLASSIFICATION OF SUBJECT MATTER**

***C08L 29/04***(2006.01)i; ***B32B 27/30***(2006.01)i
FI: C08L29/04 A; B32B27/30 102

According to International Patent Classification (IPC) or to both national classification and IPC

**B. FIELDS SEARCHED**

Minimum documentation searched (classification system followed by classification symbols)

C08L29/04; B32B27/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 2015-120827 A (THE NIPPON SYNTHETIC CHEMICAL INDUSTRY CO., LTD.) 02 July 2015 (2015-07-02) | 1-10 |
| A | JP 2006-89538 A (THE NIPPON SYNTHETIC CHEMICAL INDUSTRY CO., LTD.) 06 April 2006 (2006-04-06) | 1-10 |
| A | JP 46-37664 B1 (KURARAY CO., LTD.) 05 November 1971 (1971-11-05) | 1-10 |
| A | JP 47-11901 B1 (THE NIPPON SYNTHETIC CHEMICAL INDUSTRY CO., LTD.) 13 April 1972 (1972-04-13) | 1-10 |
| A | JP 51-91988 A (KURARAY CO., LTD.) 12 August 1976 (1976-08-12) | 1-10 |
| A | JP 2-47144 A (KURARAY CO., LTD.) 16 February 1990 (1990-02-16) | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 May 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/012537**

| Patent document cited in search report | Publication date (day/month/year) | Patent family member(s) | Publication date (day/month/year) |
|---|---|---|---|
| JP 2015-120827 A | 02 July 2015 | (Family: none) | |
| JP 2006-89538 A | 06 April 2006 | (Family: none) | |
| JP 46-37664 B1 | 05 November 1971 | (Family: none) | |
| JP 47-11901 B1 | 13 April 1972 | (Family: none) | |
| JP 51-91988 A | 12 August 1976 | (Family: none) | |
| JP 2-47144 A | 16 February 1990 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002284818 A
- JP 2004285143 A
- JP 2006095825 A
- JP 2001288321 A
- JP 2023058957 A

### Non-patent literature cited in the description

- *Journal of Pharmaceutical and Biomedical Analysis*, 2006, vol. 41, 738-743